(19) **Europäisches Patentamt**
**European Patent Office**
**Office européen des brevets**

(11) **EP 4 033 130 B1**

(12) **EUROPEAN PATENT SPECIFICATION**

(45) Date of publication and mention
of the grant of the patent:
**11.02.2026 Bulletin 2026/07**

(51) International Patent Classification (IPC):
**F16K 11/065** (2006.01)    **F25B 41/26** (2021.01)

(21) Application number: **20864380.9**

(52) Cooperative Patent Classification (CPC):
**F25B 41/26; F16K 11/0655**

(22) Date of filing: **26.08.2020**

(86) International application number:
**PCT/JP2020/032102**

(87) International publication number:
**WO 2021/054065 (25.03.2021 Gazette 2021/12)**

(54) **FLOW PASSAGE SWITCHING VALVE**

STRÖMUNGSDURCHGANGSUMSCHALTVENTIL

DISTRIBUTEUR HYDRAULIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2019 JP 2019170567**

(43) Date of publication of application:
**27.07.2022 Bulletin 2022/30**

(73) Proprietor: **Fujikoki Corporation
Tokyo 158-0082 (JP)**

(72) Inventors:
• **KIBUNE Hitoshi**
**Tokyo 158-0082 (JP)**
• **MORITA Noriyuki**
**Tokyo 158-0082 (JP)**

(74) Representative: **Ter Meer Steinmeister & Partner
Patentanwälte mbB
Artur-Ladebeck-Strasse 51
33617 Bielefeld (DE)**

(56) References cited:
**CN-A- 109 424 764    CN-A- 109 578 616
JP-A- 2019 065 896    JP-A- H07 324 844**

**Description**

Technical Field

The present invention relates to a sliding flow passage switching valve.

Background Art

Heat-pump cooling and heating systems of room air conditioners, car air conditioners, and the like include a flow passage switching valve that switches flow directions of a refrigerant in accordance with switching between cooling and heating operations.

Patent Literature 1 discloses a flow passage switching valve of the related art. As illustrated in Fig. 8, a flow passage switching valve 901 is a six-way switching valve. The flow passage switching valve 901 includes a valve housing 910 in a cylindrical shape and a valve member 918. The valve member 918 is disposed in the valve housing 910. The valve member 918 slides in an axis L direction by being pushed by a bracket 953. A first valve seat 913 and a second valve seat 915 are disposed in the valve housing 910 and face each other in a direction perpendicular to an axis L. The first valve seat 913 includes three ports pB, pA, and pF arranged side by side in this order in the axis L direction. The second valve seat 915 includes three other ports pC, pD, and pE arranged side by side in this order in the axis L direction to face the three ports pB, pA, and pF.

The valve member 918 includes a first U-turn passage 928 through which two ports (port pA and port pB, or port pA and port pF) of the three ports are connected and a second U-turn passage 929 through which two ports (port pC and port pD, or port pE and port pD) of the three other ports are connected. In addition, the valve member 918 includes a first straight passage 936 through which the port pC and the port pB are connected and a second straight passage 946 through which the port pE and the port pF are connected. CN 109 578 616 A discloses a flow passage switching valve according to the preamble of claims 1 and 2. It reveals a six-way switching valve comprising three ports which are open side by side in the direction of an axis. On the opposite side of the three ports with respect to the axis, three other ports are open side by side in the axial direction. A first U-shaped turning passage and a second U-shaped turning passage are provided in a main valve element. The main valve element is moved in the main valve chamber so that the first communication state and the second communication state can be selectively obtained. The main valve element has a cylindrical first sliding valve element and a second sliding valve element. The second slide valve body has an embedding convex portion that is slidably fitted to the first slide valve body on the left side surface. By embedding the embedding convex portion in the first sliding valve body, the first U-shaped turning passage is formed by the inner peripheral surface of the first sliding valve core and the left end surface of the embedding convex portion.

Citation List

Patent Literature

Patent Literature 1: Japanese Unexamined Patent Application Publication No. 2018-44666

Summary of Invention

Technical Problem

In the flow passage switching valve 901 described above, for example, a discharge portion of a compressor of the heat-pump cooling and heating system is connected to the port pA. A high-pressure refrigerant flows through the port pA into the first U-turn passage 928. A pressure fluctuation (pulsation) of the high-pressure refrigerant may be caused due to the operation of the compressor.
Therefore, a phenomenon (known as "chattering") in which the valve member 918 intermittently raised from the first valve seat 913 may occur in synchronization with the pulsation of the high-pressure refrigerant. There is a possibility of an occurrence of valve leakage as a result of a gap being formed between the valve member 918 and the first valve seat 913 by the chattering. The same phenomenon may occur when a high-pressure refrigerant flows in the second U-turn passage 929.

Accordingly, it is an object of the present invention to provide a flow passage switching valve capable of effectively restraining valve leakage.

Solution to Problem

To achieve the object described above, flow passage switching valves according to independent claims 1 and 2 are alternatively provided. According to an aspect of the present invention a flow passage switching valve includes a valve housing in a cylindrical shape including a valve chamber, a first valve seat disposed in the valve chamber, a second valve seat disposed in the valve chamber and facing the first valve seat, and a U-turn valve member disposed between the first valve seat and the second valve seat and slidable in an axis direction. The U-turn valve member includes a first valve component disposed near the first valve seat and a second valve component in a cylindrical shape disposed near the second valve seat. The first valve component includes a first U-turn passage which has an opening on an end surface facing the first valve seat and through which two ports of a plurality of ports provided in the first valve seat are connected, and an annular wall portion which is a portion near the second valve seat and in which an end portion of the second valve component is fitted, the end portion being near the first valve seat. A second U-turn passage through which two ports of a plurality of ports provided in the second valve seat are connected is formed by an end surface of the first valve component and an inner circumferential surface of the second valve component, the end surface facing the second valve seat. A sealing member in an annular shape is disposed between an inner circumferential surface of the annular wall portion and an outer circumferential surface of the end portion of the second valve component, the end portion being near the first valve seat. An expression (1) below holds, where Sa denotes a projected area defined by an inner shape of the sealing member projected in a direction in which the first valve seat and the second valve seat face each other, and Sb denotes an area of an opening of the second valve component, the opening facing the second valve seat.

$$(1) \quad Sb > Sa$$

To achieve the object described above, a flow passage switching valve according to another aspect of the present invention includes a valve housing in a cylindrical shape including a valve chamber, a first valve seat disposed in the valve chamber, a second valve seat disposed in the valve chamber and facing the first valve seat, and a U-turn valve member disposed between the first valve seat and the second valve seat and slidable in an axis direction. The U-turn valve member includes a first valve component disposed near the first valve seat and a second valve component in a cylindrical shape disposed near the second valve seat. The first valve component includes a first U-turn passage which has an opening on an end surface facing the first valve seat and through which two ports of a plurality of ports provided in the first valve seat are connected. An end portion of the first valve component is fitted in the second valve component, the end portion being near the second valve seat. A second U-turn passage through which two ports of a plurality of ports provided in the second valve seat are connected is formed by an end surface of the first valve component and an inner circumferential surface of the second valve component, the end surface facing the second valve seat. A sealing member in an annular shape is disposed between an outer circumferential surface of the end portion of the first valve component and the inner circumferential surface of the second valve component, the end portion being near the second valve seat. An expression (1) below holds, where Sa denotes a projected area defined by an inner shape of the sealing member projected in a direction in which the first valve seat and the second valve seat face each other, and Sb denotes an area of an opening of the second valve component, the opening facing the second valve seat.

$$(1) \quad Sb > Sa$$

According to the present invention, the U-turn valve member includes the second U-turn passage that is formed by the end surface of the first valve component facing the second valve seat and the inner circumferential surface of the second valve component. The second U-turn passage connects two ports of the plurality of ports provided in the second valve seat. As a result, a pressure of a fluid flowing through the second U-turn passage includes a pressure component in a direction from the second valve seat toward the first valve seat, and the end surface of the first valve component of the U-turn valve member can receive the pressure component. Therefore, in the flow passage switching valve according to the present invention, it is possible to restrain a gap from forming between the second valve component and the second valve seat even if a high-pressure fluid with pulsation flows through the second U-turn passage and restrain valve leakage effectively.

The opening area Sb is larger than the projected area Sa in the U-turn valve member. In this way, when a high-pressure fluid (pressure PH) flows through the valve chamber and a low-pressure fluid (pressure PL (PH > PL)) flows through the second U-turn passage, a differential pressure (PH - PL) between the high-pressure fluid flowing through the valve chamber and the low-pressure fluid flowing through the second U-turn passage acts on a differential area (Sb - Sa) between the projected area Sa and the opening area Sb. The differential pressure presses the second valve component to the second valve seat.

$$((PH - PL) \times (Sb - Sa) > 0)$$

Therefore, in the flow passage switching valve according to the present invention, it is possible to restrain a gap from forming between the second valve component and the second valve seat and restrain valve leakage effectively.

In the present invention, it is preferable that expressions (2), (3) below hold, where Sc denotes an area of an opening of the first valve component, the opening facing the first valve seat, PH denotes a pressure of a fluid in the valve chamber, PM denotes a pressure of a fluid in the first U-turn passage, and PL denotes a pressure of a fluid in the second U-turn passage.

$$(2) \quad PH > PM \geq PL$$

$$(3) \quad (PH - PM) \times (Sc - Sa) - (PM - PL) \times Sa > 0$$

In this way, when a high-pressure fluid (pressure PH) flows through the valve chamber, a medium-pressure fluid (pressure PM) flows through the first U-turn passage, and a low-pressure fluid (pressure PL) flows through the second U-turn passage,

(i) a differential pressure (PH - PM) between the high-pressure fluid flowing through the valve chamber and the medium-pressure fluid flowing through the first U-turn passage acts on a differential area (Sc - Sa) between the projected area Sa and the opening area Sc, and the differential pressure (PH - PM) works to press the first valve component to the first valve seat (the first term on the left side of the expression (3)),
(ii) a differential pressure (PM - PL) between the medium-pressure fluid flowing through the first U-turn passage and the low-pressure fluid flowing through the second U-turn passage acts on the projected area Sa, and the differential pressure (PM - PL) works to move the first valve component away from the first valve seat (the second term on the left side of the expression (3)).

Therefore, by making the above (i) greater than the above (ii), the first valve component can be pressed to the first valve seat by the pressures of the fluids. In this way, in the flow passage switching valve according to the present invention, it is possible to restrain a gap from forming between the first valve component and the first valve seat and restrain valve leakage effectively.

In the present invention, it is preferable that the flow passage switching valve further include a straight valve member disposed between the first valve seat and the second valve seat and slidable in the axis direction. It is preferable that the straight valve member be disposed slidably together with the U-turn valve member and include a straight passage through which a port of the plurality of ports provided in the first valve seat and a port of the plurality of ports provided in the second valve seat are connected. In this way, the flow passage switching valve according to the present invention can allow fluid to flow smoothly between ports that are connected by the straight passage.

In the present invention, it is preferable that a compressed coil spring be disposed between the first valve component and the second valve component. In this way, in the flow passage switching valve according to the present invention, the first valve component can be pressed to the first valve seat more securely, and the second valve component can be pressed to the second valve seat more securely. It is possible to restrain valve leakage effectively.

Advantageous Effects of Invention

According to the present invention, it is possible to restrain valve leakage effectively.

Brief Description of Drawings

[Fig. 1] Fig. 1 is a sectional view of a flow passage switching valve according to an embodiment of the present invention.
[Fig. 2] Fig. 2 is a sectional view of the flow passage switching valve in Fig. 1 in a different state.
[Fig. 3] Fig. 3 is an enlarged sectional view of a valve member and members in its vicinity of the flow passage switching valve in Fig. 1.
[Fig. 4] Fig. 4 is an enlarged sectional view of the valve member and the members in its vicinity of the flow passage switching valve in Fig. 1 in the different state.
[Fig. 5] Fig. 5 illustrates a modification of the flow passage switching valve in Fig. 1.

[Fig. 6] Fig. 6 illustrates a U-turn valve member of the flow passage switching valve in Fig. 1.

[Fig. 7] Fig. 7 illustrates a modification of the U-turn valve member in Fig. 6.

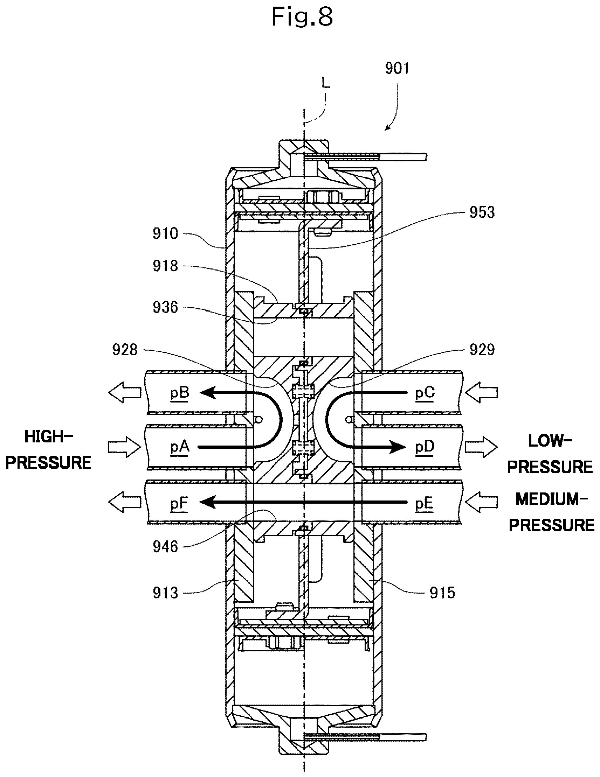

[Fig. 8] Fig 8 is a sectional view of a flow passage switching valve of the related art.

Description of Embodiments

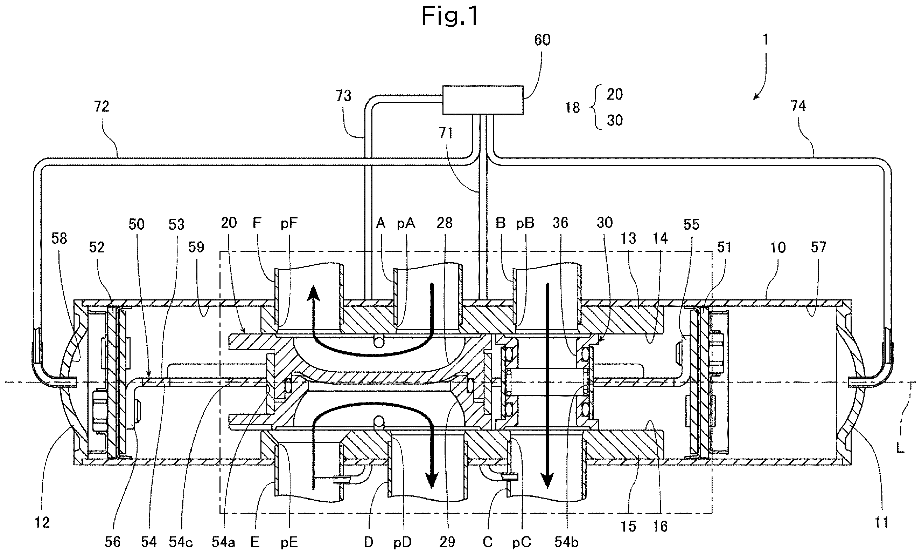

A flow passage switching valve according to an embodiment of the present invention is described with reference to Fig. 1 to Fig. 6.

The flow passage switching valve according to the present embodiment is a six-way switching valve and is included in a heat-pump cooling and heating system of room air conditioners, car air conditioners, and the like for switching flow directions of a refrigerant as a fluid in accordance with switching between cooling and heating operations.

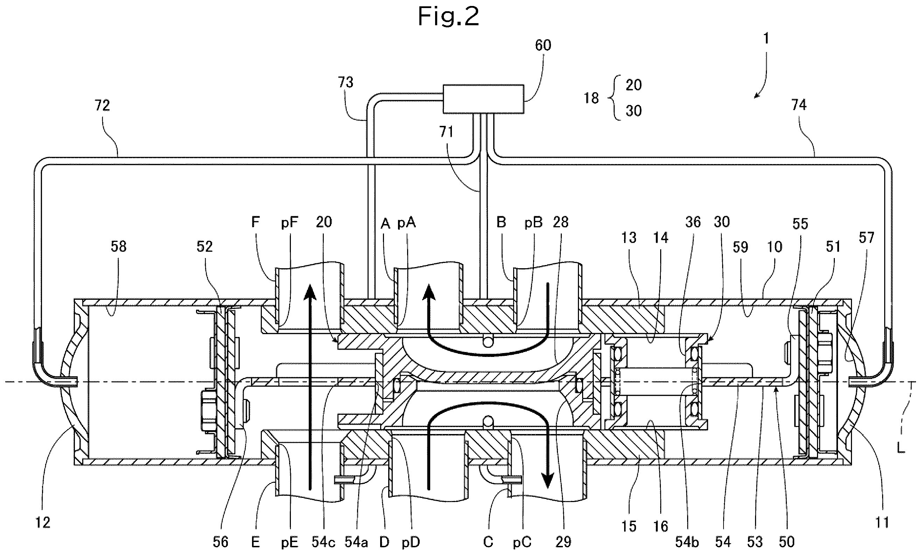

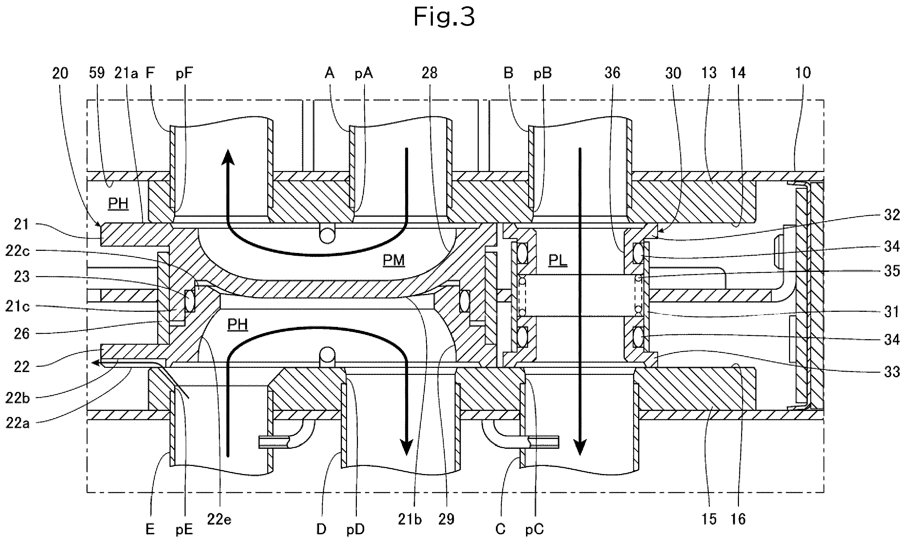

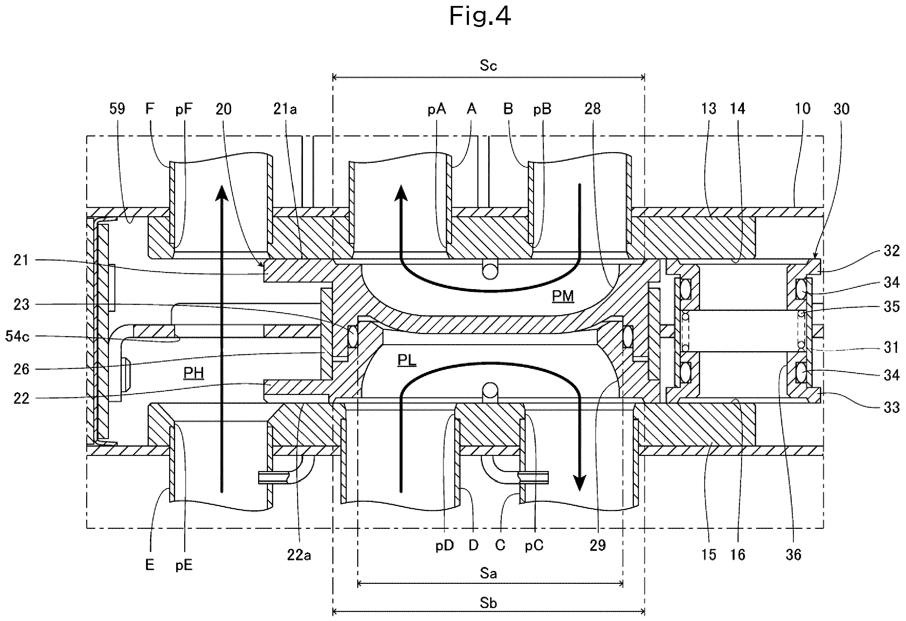

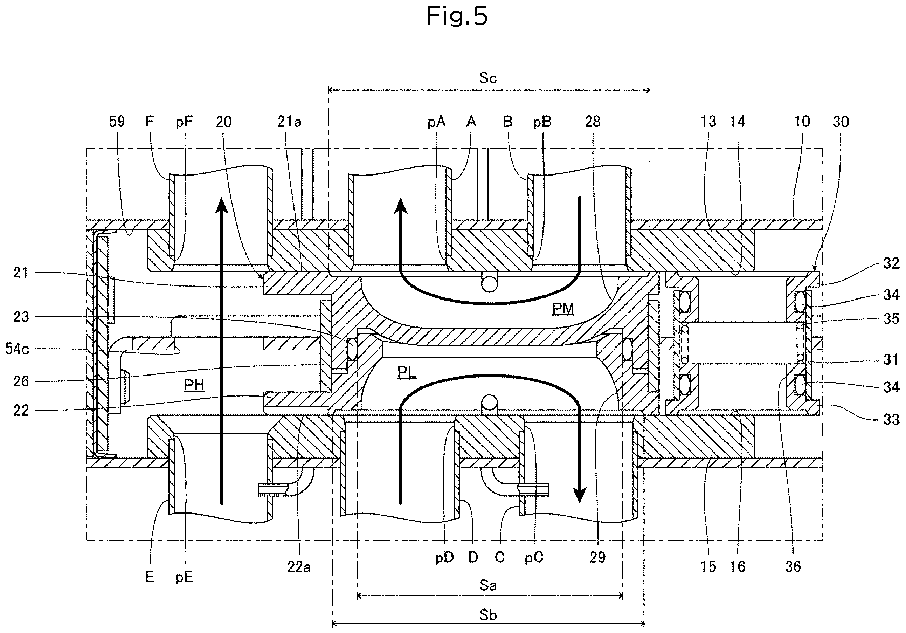

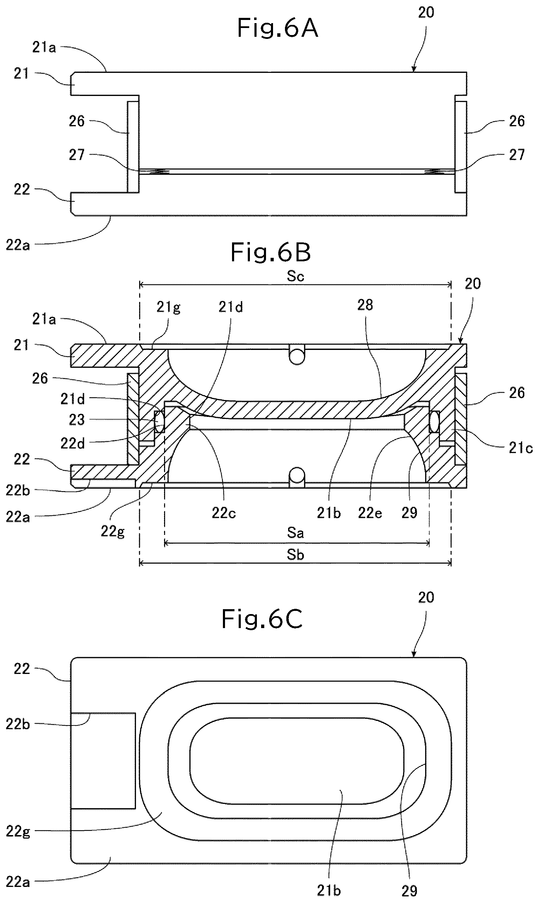

Fig. 1 and Fig. 2 are sectional views of the flow passage switching valve according to an embodiment of the present invention. Fig. 3 and Fig. 4 are enlarged sectional views of a valve-member unit and members in its vicinity of the flow passage switching valve in Fig. 1. Fig 1 and Fig 3 illustrate a state in which the valve-member unit is in a first stop position (for example, a stop position during cooling operation). Fig 2 and Fig 4 illustrate a state in which the valve-member unit is in a second stop position (for example, a stop position during heating operation). Fig. 5 illustrates a modification of the flow passage switching valve in Fig. 1. Fig. 5 is an enlarged sectional view of the valve-member unit and members in its vicinity of the flow passage switching valve. Fig. 6 illustrates a U-turn valve member of the flow passage switching valve in Fig. 1. Fig. 6A is a front view of the U-turn valve member. Fig. 6B is a sectional view of the U-turn valve member. Fig. 6C illustrates the U-turn valve member viewed from a second valve seat side. In Fig. 1 to Fig. 5, bold arrows schematically indicate examples of refrigerant flow.

As illustrated in Fig. 1 to Fig. 3, a flow passage switching valve 1 according to the present embodiment includes a valve housing 10, a valve-member unit 18, a piston section 50, and a pilot section 60.

The valve housing 10 has a cylindrical shape. An axis of the valve housing 10 is coincident with an axis L. An end cover 11 is fixed to a first end (right end in Fig. 1 and Fig.2) of the valve housing 10. An end cover 12 is fixed to a second end (left end in Fig. 1 and Fig. 2) of the valve housing 10. A first valve seat 13 and a second valve seat 15 are disposed in the valve housing 10.

The first valve seat 13 is fixed to an inner circumferential surface of the valve housing 10. The first valve seat 13 includes a first valve seat surface 14. The first valve seat surface 14 includes circular ports pB, pA, and pF arranged side by side in this order from the right side toward the left side in Fig. 1 and Fig. 2 in an axis L direction. A conduit B, which is a circular pipe, passes through the valve housing 10 and is connected to the port pB. A conduit A, which is a circular pipe, passes through the valve housing 10 and is connected to the port pA. A conduit F, which is a circular pipe, passes through the valve housing 10 and is connected to the port pF.

The second valve seat 15 is fixed to the inner circumferential surface of the valve housing 10. The first valve seat 13 and the second valve seat 15 face each other in a direction perpendicular to the axis L. A direction in which the first valve seat 13 and the second valve seat 15 face each other is simply referred to as "facing direction". The second valve seat 15 includes a second valve seat surface 16. The second valve seat surface 16 includes circular ports pC, pD, and pE arranged side by side in this order from the right side toward the left side in Fig. 1 and Fig. 2 in the axis L direction. An outer diameter of a chamfer (annular tapered surface) of the port pE is larger than outer diameters of chamfers of the port pC and the port pD. The port pC faces the port pB of the first valve seat 13. The port pD faces the port pA of the first valve seat 13. The port pE faces the port pF of the first valve seat 13. A conduit C, which is a circular pipe, passes through the valve housing 10 and is connected to the port pC. A conduit D, which is a circular pipe, passes through the valve housing 10 and is connected to the port pD. A conduit E, which is a circular pipe, passes through the valve housing 10 and is connected to the port pE.

In the present embodiment, the conduit E is connected to a discharging section of a compressor of the heat-pump cooling and heating system. A high-pressure refrigerant flows through the conduit E. The conduit C is connected to a suctioning section of the compressor. A low-pressure refrigerant flows through the conduit C.

The valve-member unit 18 includes a U-turn valve member 20 and a straight valve member 30. The U-turn valve member 20 and the straight valve member 30 are separate parts.

The U-turn valve member 20 and the straight valve member 30 are disposed between the first valve seat 13 and the second valve seat 15 and slidable in the axis L direction. A bracket 53 of the piston section 50 integrally supports the U-turn valve member 20 and the straight valve member 30.

As illustrated in Fig. 6, the U-turn valve member 20 includes a first valve component 21, a second valve component 22, a sealing member 23, and plates 26, 26.

The first valve component 21 is made of, for example, synthetic resin. The first valve component 21 is in a substantially rectangular parallelepiped shape. The first valve component 21 is disposed near the first valve seat 13. An end surface 21a of the first valve component 21 facing the first valve seat 13 is in contact with the first valve seat surface 14. The end surface 21a includes a first U-turn passage 28 which is a substantially semi-ellipsoidal recess. The first U-turn passage 28 has an opening on the end surface 21a. The first valve component 21 includes an annular wall portion 21c which is formed on an end surface 21b near the second valve seat 15. The annular wall portion 21c is disposed along a peripheral edge of the end surface 21b. The annular wall portion 21c protrudes from the end surface 21b toward the second valve seat 15.

The second valve component 22 is made of, for example, synthetic resin. The second valve component 22 is in a substantially quadrangular cylindrical shape. The second valve component 22 is disposed near the second valve seat 15. The second valve component 22 has an outer shape that becomes smaller in a stepped manner from the second valve seat 15 toward the first valve seat 13. An end surface 22a of the second valve component 22 facing the second valve seat 15 is in contact with the second valve seat surface 16. A pressure equalizing groove 22b serving as a pressure equalizing passage is formed at an end portion of the end surface 22a near the end cover 12. In the present embodiment, only when the valve-member unit 18 is in the first stop position, the port pE is connected to a valve chamber 59 (described later) through a space between the pressure equalizing groove 22b and the chamfer of the port pE. An end portion 22c of the second valve component 22 near the first valve seat 13 is fitted in the annular wall portion 21c of the first valve component 21. In this way, a second U-turn passage 29 is formed by the end surface 21b of the first valve component 21 facing the second valve seat 15 and an inner circumferential surface 22e of the second valve component 22.

The sealing member 23 is, for example, an O-ring made of an elastic material. The sealing member 23 is disposed between an inner circumferential surface 21d of the annular wall portion 21c of the first valve component 21 and an outer circumferential surface 22d of the end portion 22c of the second valve component 22 near the first valve seat 13. An area defined by an inner shape of the sealing member 23 projected in the facing direction is a projected area Sa. An area of an opening of the second valve component (an area of an opening of the second U-turn passage 29) facing the second valve seat 15 is an opening area Sb. An area of the opening (an area of the opening of the first U-turn passage 28) on the end surface of the first valve component 21 facing the first valve seat 13 is an opening area Sc. The U-turn valve member 20 is configured such that the opening area Sb is larger than the projected area Sa (Sb > Sa). The U-turn valve member 20 is configured such that the opening area Sb is the same as the opening area Sc (Sb = Sc). In a state in which the high-pressure refrigerant is placed in the valve chamber 59, the sealing member 23, substantially integrally with the first valve component 21, receives a pressure of the high-pressure refrigerant.

A step portion 22g in an annular shape is formed on an inner circumferential surface of the opening of the second valve component 22 facing the second valve seat 15. The step portion 22g faces the second valve seat surface 16 with a space therebetween. By adjusting a contour of the step portion 22g, the size of the opening area Sb can be adjusted. Similarly, a step portion 21g in an annular shape is formed on an inner circumferential surface of the opening of the first valve component 21 facing the first valve seat 13. The step portion 21g faces the first valve seat surface 14 with a space therebetween. By adjusting a contour of the step portion 21g, the size of the opening area Sc can be adjusted.

The plates 26, 26 are made of metal. Each of the plates 26, 26 is in a flat plate shape. The plates 26, 26 are disposed with the first valve component 21 and the second valve component 22 interposed therebetween in the axis L direction. The plates 26, 26 made of metal have high rigidity, and the bracket 53 can push, via the plates 26, 26, a portion of the first valve component 21 near the first valve seat 13. Therefore, compared with a configuration in which the bracket 53 pushes a portion of the first valve component 21 away from the first valve seat 13, in the flow passage switching valve 1, the first valve component 21 can be restrained more effectively from being raised from the first valve seat surface 14 when the first valve component 21 slides. Similarly, the bracket 53 can push, via the plates 26, 26, a portion of the second valve component 22 near the second valve seat 15. Therefore, compared with a configuration in which the bracket 53 pushes a portion of the second valve component 22 away from the second valve seat 15, in the flow passage switching valve 1, the second valve component 22 can be restrained more effectively from being raised from the second valve seat surface 16 when the second valve component 22 slides. Accordingly, it is possible to enhance durability of the flow passage switching valve 1. It is also possible to restrain generation of an abnormal noise caused by stick slip in the flow passage switching valve 1.

The U-turn valve member 20 includes a plurality of spring members 27. Each of the spring members 27 is a compressed coil spring. The plurality of spring members 27 is disposed between the first valve component 21 and the second valve component 22. The plurality of spring members 27 applies a force to the first valve component 21 and the second valve component 22 to be separated from each other in the facing direction. The force presses the first valve component 21 to the first valve seat surface 14 and presses the second valve component 22 to the second valve seat surface 16.

The U-turn valve member 20 is configured such that an expression (1) below holds, where Sa denotes the projected area defined by the inner shape of the sealing member 23 projected in the facing direction, and Sb denotes the area of the opening of the second valve component 22 facing the second valve seat 15.

$$(1) \quad Sb > Sa$$

In this way, in the second stop position, when the high-pressure refrigerant (pressure PH) flows through the valve chamber 59 and the low-pressure refrigerant (pressure PL (PH > PL)) flows through the second U-turn passage 29, a differential pressure (PH - PL) between the high-pressure refrigerant flowing through the valve chamber 59 and the low-pressure fluid flowing through the second U-turn passage 29 acts on a differential area (Sb - Sa) between the projected area Sa and the opening area Sb. The differential pressure presses the second valve component 22 to the second valve seat 15 ((PH - PL) $\times$ (Sb - Sa) > 0). Therefore, it is possible to restrain a gap from forming between the second valve component 22 and the second valve seat 15 and restrain valve leakage effectively in the flow passage switching valve 1.

The U-turn valve member 20 is configured such that expressions (2), (3) below hold, where Sc denotes the area of the opening of the first valve component 21 facing the first valve seat 13 (that is, an opening area of the first U-turn passage 28), PH denotes the pressure of the high-pressure refrigerant in the valve chamber 59, PM denotes the pressure of the medium-pressure refrigerant in the first U-turn passage 28, and PL denotes the pressure of the low-pressure refrigerant in the second U-turn passage 29.

$$(2) \quad PH > PM \geq PL$$

$$(3) \quad (PH - PM) \times (Sc - Sa) - (PM - PL) \times Sa > 0$$

In this way, in the second stop position, when the high-pressure refrigerant (pressure PH) flows through the valve chamber 59, the medium-pressure refrigerant (pressure PM) flows through the first U-turn passage 28, and the low-pressure refrigerant (pressure PL) flows through the second U-turn passage 29,

(i) a differential pressure (PH - PM) between the high-pressure fluid flowing through the valve chamber 59 and the medium-pressure fluid flowing through the first U-turn passage 28 acts on a differential area (Sc - Sa) between the projected area Sa and the opening area Sc, and the differential pressure (PH - PM) works to press the first valve component 21 to the first valve seat 13 (the first term on the left side of the expression (3)),

(ii) a differential pressure (PM - PL) between the medium-pressure fluid flowing through the first U-turn passage 28 and the low-pressure fluid flowing through the second U-turn passage 29 acts on the projected area Sa, and the differential pressure (PM - PL) works to move the first valve component 21 away from the first valve seat 13 (the second term on the left side of the expression (3)).

Therefore, by making the above (i) greater than the above (ii), the first valve component 21 can be pressed to the first valve seat 13 by the pressures of the refrigerants. In this way, it is possible to restrain a gap from forming between the first valve component 21 and the first valve seat 13 and restrain valve leakage effectively in the flow passage switching valve 1.

In the present embodiment, the pressure PM of the medium-pressure refrigerant and the pressure PL of the low-pressure refrigerant are almost equal, and the above (ii) is almost 0. Therefore, the expression (3) above can be replaced with an expression (3') below.

$$(3') \quad (PH - PM) \times (Sc - Sa) > 0$$

The straight valve member 30 has an outer cylinder member 31 in a cylindrical shape, a first member 32 in a cylindrical shape, a second member 33 in a cylindrical shape, O-rings 34, 34, and a spring member 35. The first member 32 is disposed in an end portion of the outer cylinder member 31 near the first valve seat 13. The second member 33 is disposed in an end portion of the outer cylinder member 31 near the second valve seat 15. A space between the outer cylinder member 31 and the first member 32 is sealed by the O-ring 34. A space between the outer cylinder member 31 and the second member 33 is sealed by the O-ring 34. The outer cylinder member 31, the first member 32, and the second member 33 form a straight passage 36. The spring member 35 is disposed between the first member 32 and the second member 33. The spring member 35 is a compressed coil spring. The spring member 35 presses the first member 32 to the first valve seat surface 14 and presses the second member 33 to the second valve seat surface 16.

In the present embodiment, the outer cylinder member 31 is made of metal. The first member 32 and the second member 33 are each made of synthetic resin. Due to the outer cylinder member 31 being made of metal having high rigidity, the bracket 53 can push, via the outer cylinder member 31, a portion of the first member 32 near the first valve seat 13. Therefore, compared with a configuration in which the bracket 53 pushes a portion of the first member 32 away from the first valve seat 13, in the flow passage switching valve 1, the first member 32 can be restrained more effectively from being raised from the first valve seat surface 14 when the first member 32 slides. Similarly, the bracket 53 can push, via the outer cylinder member 31, a portion of the second member 33 near the second valve seat 15. Therefore, compared with a configuration in which the bracket 53 pushes a portion of the second member 33 away from the second valve seat 15, in the flow passage switching valve 1, the second member 33 can be restrained more effectively from being raised from the second valve seat surface 16 when the second member 33 slides. Accordingly, it is possible to enhance durability of the flow passage switching valve 1. It is also possible to restrain generation of an abnormal noise caused by stick slip in the flow passage switching valve 1.

When the valve-member unit 18 slides on the first valve seat surface 14 and the second valve seat surface 16 toward the second end of the valve housing 10 in the axis L direction, the valve-member unit 18 is positioned in the first stop position. When the valve-member unit 18 slides toward the first end of the valve housing 10, the valve-member unit 18 is positioned in the second stop position.

When the valve-member unit 18 is present in the first stop position, the first U-turn passage 28 connects the port pA and the port pF of the plurality of ports pB, pA, and pF provided in the first valve seat 13. The second U-turn passage 29 connects the port pE and the port pD of the plurality of the ports pC, pD, and pE provided in the second valve seat 15. The straight passage 36 connects the port pB provided in the first valve seat 13 and the port pC provided in the second valve seat 15. The pressure equalizing groove 22b connects the port pE and the valve chamber 59.

When the valve-member unit 18 is present in the second stop position, the first U-turn passage 28 connects the port pB and the port pA of the plurality of ports pB, pA, and pF provided in the first valve seat 13. The second U-turn passage 29 connects the port pD and the port pC of the plurality of the ports pC, pD, and pE provided in the second valve seat 15. The valve chamber 59 connects the port pF provided in the first valve seat 13 and the port pE provided in the second valve seat 15.

The piston section 50 includes a first piston 51, a second piston 52, and the bracket 53.

The first piston 51 is disposed between the end cover 11 provided at the first end of the valve housing 10, and the first valve seat 13 and the second valve seat 15. A first working chamber 57 is formed between the first piston 51 and the end cover 11. The second piston 52 is disposed between the end cover 12 provided at the second end portion of the valve housing 10, and the first valve seat 13 and the second valve seat 15. A second working chamber 58 is formed between the second piston 52 and the end cover 12. The valve chamber 59 is formed between the first piston 51 and the second piston 52. The first valve seat 13, the second valve seat 15 and the valve-member unit 18 are disposed in the valve chamber 59.

The bracket 53 is made of metal and integrally includes a bracket body 54 in a rectangular plate shape and piston mounting pieces 55 and 56. The piston mounting piece 55 is provided at one end of the bracket body 54. The piston mounting piece 56 is provided at the other end of the bracket body 54. The bracket body 54 has a U-turn-valve-member holding hole 54a in a substantially rectangular shape, a straight-valve-member holding hole 54b in a circular shape, and a refrigerant passage hole 54c. The U-turn valve member 20 is disposed in the U-turn-valve-member holding hole 54a. The straight valve member 30 is disposed in the straight-valve-member holding hole 54b. In the state in which the valve-member unit 18 is in the second stop position, the refrigerant passage hole 54c is disposed between the port pF and port pE. The first piston 51 is mounted on the piston mounting piece 55. The second piston 52 is mounted on the piston mounting piece 56. The bracket 53 couples the first piston 51 and the second piston 52 to each other.

The pilot section 60 is, for example, a solenoid-type flow passage switching valve. The pilot section 60 switches connections of the first working chamber 57 and the second working chamber 58, and the conduit C and the conduit E by switching connections of thin pipes 71 to 74. The pilot section 60 thereby controls pressures of refrigerants in the first working chamber 57 and the second working chamber 58. In the flow passage switching valve 1, a differential pressure between the refrigerants in the first working chamber 57 and the second working chamber 58 makes the piston section 50 move toward the first end or the second end of the valve housing 10. Along with the movement of the piston section 50, the valve-member unit 18 supported by the bracket 53 slides in the axis L direction. The valve-member unit 18 is positioned in the first stop position illustrated in Fig. 1 and Fig. 3 or in the second stop position illustrated in Fig. 2 and Fig. 4.

Next, an example of the operation of the flow passage switching valve 1 is described.

During a cooling operation, the pilot section 60 connects the thin pipe 71 and the thin pipe 72 to each other and connects the thin pipe 73 and the thin pipe 74 to each other in the flow passage switching valve 1. In this way, the conduit C and the second working chamber 58 are connected to each other and the conduit E and the first working chamber 57 are connected to each other, which increases the pressure of the refrigerant in the first working chamber 57 and decreases the pressure of the refrigerant in the second working chamber 58. The differential pressure between the refrigerants makes the piston section 50 move toward the second end of the valve housing 10, and, as illustrated in Fig. 1 and Fig. 3, the valve-member unit 18 is positioned in the first stop position.

In the first stop position, the first U-turn passage 28 connects the port pA and the port pF. The medium-pressure refrigerant (pressure PM) flows through the first U-turn passage 28. The second U-turn passage 29 connects the port pE and the port pD. The high-pressure refrigerant (pressure PH) flows through the second U-turn passage 29. The straight passage 36 connects the port pB and the port pC. The low-pressure refrigerant (pressure PL) flows through the straight passage 36. The pressure equalizing groove 22b connects the port pE and the valve chamber 59. The high-pressure refrigerant (pressure PH) is placed in the valve chamber 59. At this time, in the U-turn valve member 20, a differential pressure between the high-pressure refrigerant flowing through the second U-turn passage 29 and the medium-pressure refrigerant flowing through the first U-turn passage 28 presses the first valve component to the first valve seat surface 14. Due to the second valve component 22 having the cylindrical shape, the end surface 21b of the first valve component 21 can receive a pressure component, which is included in the pressure of the refrigerant flowing through the second U-turn passage 29, in a direction from the second valve seat 15 toward the first valve seat 13. Therefore, the end surface 21b of the first valve component 21 can receive pulsation of the high-pressure refrigerant. The plurality of spring members 27 presses the first valve component 21 to the first valve seat surface 14 and presses the second valve component 22 to the second valve seat surface 16.

During a heating operation, the pilot section 60 connects the thin pipe 71 and the thin pipe 74 to each other and connects the thin pipe 72 and the thin pipe 73 to each other in the flow passage switching valve 1. In this way, the conduit C and the first working chamber 57 are connected to each other and the conduit E and the second working chamber 58 are connected to each other, which decreases the pressure of the refrigerant in the first working chamber 57 and increases the pressure of the refrigerant in the second working chamber 58. The differential pressure between the refrigerants makes the piston section 50 move toward the first end of the valve housing 10, and, as illustrated in Fig. 2 and Fig. 4, the valve-member unit 18 is positioned in the second stop position.

In the second stop position, the first U-turn passage 28 connects the port pB and the port pA. The medium-pressure refrigerant (pressure PM) flows through the first U-turn passage 28. The second U-turn passage 29 connects the port pD and the port pC. The low-pressure refrigerant (pressure PL) flows through the second U-turn passage 29. The valve chamber 59 connects the port pE and the port pF. The high-pressure refrigerant (pressure PH) flows through the valve chamber 59. At this time, the differential pressure (PH - PL) between the high-pressure refrigerant flowing through the valve chamber 59 and the low-pressure refrigerant flowing through the second U-turn passage 29 acts on the differential area (Sb - Sa) between the projected area Sa and the opening area Sb. The differential pressure presses the second valve component 22 to the second valve seat 15. In the present embodiment, the pressure PM of the medium-pressure refrigerant and the pressure PL of the low-pressure refrigerant are almost equal. Therefore, the differential pressure (PH - PM) between the high-pressure refrigerant flowing through the valve chamber 59 and the medium-pressure refrigerant flowing through the first U-turn passage 28 acts on the differential area (Sc - Sa) between the projected area Sa and the opening area Sc (the expression (3')). The differential pressure presses the first valve component 21 to the first valve seat 13. The plurality of spring members 27 presses the first valve component 21 to the first valve seat surface 14 and presses the second valve component 22 to the second valve seat surface 16.

Alternatively, as illustrated in Fig. 5 for example, when the pressure PM of the medium-pressure refrigerant is sufficiently larger than the pressure PL of the low-pressure refrigerant, the opening area Sc of the first valve component 21 may be larger (Sc > Sb). By adjusting the projected area Sa, the opening area Sb, and the opening area Sc to satisfy the expression (3) above, the first valve component 21 can be pressed to the first valve seat 13 by the pressures of the refrigerants.

In this way, it is possible to press the first valve component 21 to the first valve seat 13 and to press the second valve component 22 to the second valve seat 15 when the valve-member unit 18 is present in either of the first stop position and the second stop position.

As described above, according to the flow passage switching valve 1 of the present invention, in the U-turn valve member 20, the end surface 21b of the first valve component 21 facing the second valve seat 15 and the inner circumferential surface 22e of the second valve component 22 form the second U-turn passage 29. The second U-turn passage 29 connects the port pE and the port pD or connects the port pD and the port pC of the second valve seat 15. As a result, the pressure of the refrigerant flowing through the second U-turn passage 29 includes the pressure component in the direction from the second valve seat 15 toward the first valve seat 13, and the end surface 21b of the first valve component 21 can receive the pressure component in the U-turn valve member 20. Therefore, even if a high-pressure fluid with pulsation flows in the second U-turn passage 29, it is possible to restrain a gap from forming between the second valve component 22 and the second valve seat 15 and restrain valve leakage effectively in the flow passage switching valve 1.

The opening area Sb is larger than the projected area Sa in the U-turn valve member 20. In this way, when the high-pressure refrigerant (pressure PH) flows through the valve chamber 59 and the low-pressure refrigerant (pressure PL (PH > PL)) flows through the second U-turn passage 29, the differential pressure (PH - PL) between the high-pressure refrigerant flowing through the valve chamber 59 and the low-pressure refrigerant flowing through the second U-turn passage 29 acts on the differential area (Sb - Sa) between the projected area Sa and the opening area Sb. The differential pressure presses the second valve component 22 to the second valve seat 15 ((PH - PL) $\times$ (Sb - Sa) > 0). Therefore, it is possible to restrain a gap from forming between the second valve component 22 and the second valve seat 15 and restrain valve leakage effectively in the flow passage switching valve 1.

The flow passage switching valve 1 includes the straight valve member 30 disposed between the first valve seat 13 and the second valve seat 15 and slidable in the axis direction. The straight valve member 30 is configured to slide together with the U-turn valve member 20. The straight valve member 30 includes the straight passage 36 through which the port pB of the first valve seat 13 and the port pC of the second valve seat 15 are connected. In this way, it is possible to allow refrigerant to flow smoothly between the port pB and the port pC by the straight passage 36 in the flow passage switching valve 1.

In the U-turn valve member 20, the spring members 27 are disposed between the first valve component 21 and the second valve component 22. In this way, in the flow passage switching valve 1, the first valve component 21 can be pressed to the first valve seat 13 more securely, and the second valve component 22 can be pressed to the second valve seat 15 more securely. Therefore, it is possible to restrain valve leakage more effectively in the flow passage switching valve 1.

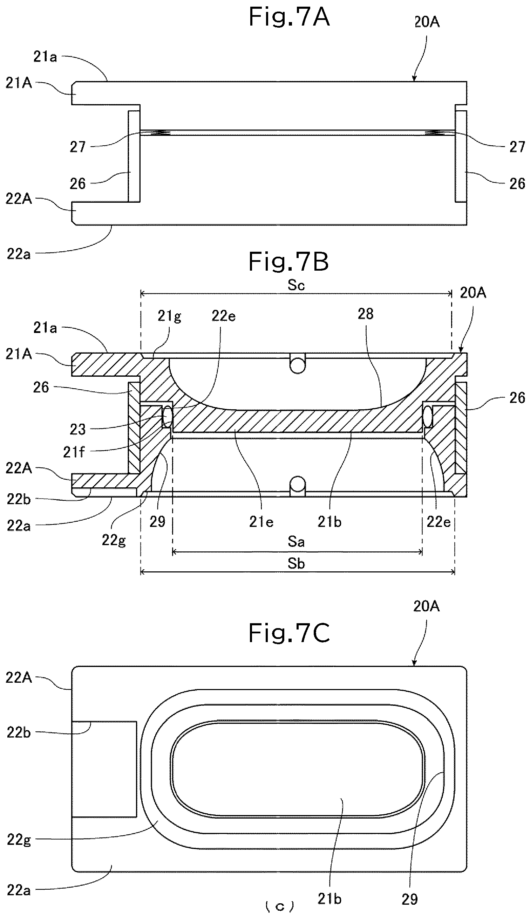

In the U-turn valve member 20 of the flow passage switching valve 1 according to the embodiment described above, the end portion 22c of the second valve component 22 near the first valve seat 13 is fitted in the annular wall portion 21c of the first valve component 21. The sealing member 23 in the annular shape is disposed between the inner circumferential surface 21d of the annular wall portion 21c and the outer circumferential surface 22d of the end portion 22c of the second valve component 22. The present invention, however, is not limited to such a configuration. In the flow passage switching valve 1 described above, instead of the U-turn valve member 20, for example, a U-turn valve member 20A illustrated in Fig. 7 may be adopted. Fig. 7 illustrates a modification of the U-turn valve member in Fig. 6. Fig. 7A illustrates a front view of the modification. Fig. 7B illustrates a sectional view of the modification. Fig. 7C illustrates the U-turn valve member 20A viewed from a second valve seat 15 side.

The U-turn valve member 20A has a first valve component 21A and a second valve component 22A. In the U-turn valve member 20A, an end portion 21e of the first valve component 21A near the second valve seat 15 is fitted in the second valve component 22A. An end surface 21b of the first valve component 21A facing the second valve seat 15 and an inner circumferential surface 22e of the second valve component 22A form a second U-turn passage 29. The second U-turn passage 29 connects two ports of the plurality of the ports pC, pD, and pE provided in the second valve seat 15. A sealing member 23 in an annular shape is disposed between an outer circumferential surface 21f of an end portion 21e of the first valve component 21A near the second valve seat 15 and an inner circumferential surface 22e of the second valve component 22A. The sealing member 23 receives the pressure of the high-pressure refrigerant substantially integrally with the second valve component 22A in a state where the pressure of the high-pressure refrigerant is placed in the valve chamber 59.

The U-turn valve member 20A is configured such that the expression (1) above holds, where Sa denotes a projected area defined by an inner shape of the sealing member 23 projected in the facing direction, and Sb denotes an area of an opening of the second valve component 22A facing the second valve seat 15.

The flow passage switching valve including the U-turn valve member 20A also has functions and effects similar to or the same as those of the flow passage switching valve 1 according to the embodiment described above.

In the flow passage switching valve 1 according to the embodiment described above, the pressure equalizing groove 22b is formed on the end surface 22a of the second valve component 22 facing the second valve seat 15. The present invention, however, is not limited to such a configuration. For example, a pressure equalizing groove serving as a pressure equalizing passage may be formed on the second valve seat surface 16 of the second valve seat 15, the pressure equalizing groove extending from the port pE to the end portion of the second valve seat surface 16 near the end cover 12. The pressure equalizing groove connects the port pE and the valve chamber 59, when the valve-member unit 18 is in the first stop position and the port pE is covered by the U-turn valve member 20. Alternatively, instead of such a pressure equalizing groove, a through hole serving as a pressure equalizing passage may be formed. The through hole passes through the second valve seat 15 and connects the port pE and the valve chamber 59. That is, it is sufficient to have a pressure equalizing passage connecting the port, through which the highest pressure refrigerant flows, of the plurality of ports on the second valve seat 15 to the valve chamber 59.

The embodiment according to the present invention is described above. The present invention, however, is not limited to the embodiment. Embodiments obtained by appropriately adding, removing, or modifying components according to the embodiment described above by a person skilled in the art, and an embodiment obtained by appropriately combining features of the embodiment are included in the scope of the present invention as long as they do not depart from the subject-matter of the appended claims.

Reference Signs List

1 ... flow passage switching valve, 10 ... valve housing, 11, 12 ... end cover, 13 ... first valve seat, 14 ... first valve seat surface, 15 ... second valve seat, 16 ... second valve seat surface, 18 ... valve-member unit, 20 ... U-turn valve member, 21 ... first valve component, 21a ... end surface of first valve component facing first valve seat, 21b ... end surface of first valve component facing second valve seat, 21c ... annular wall portion, 21d ... inner circumferential surface of annular wall portion, 21g ... step portion, 22 ... second valve component, 22a ... end surface of second valve component facing second valve seat, 22b ... pressure equalizing groove, 22c ... end portion of second valve component near first valve seat, 22d ... outer circumferential surface of end portion of first valve component near second valve seat, 22g ... step portion, 23 ... sealing member, 26 ... plate, 27 ... spring member, 28 ... first U-turn passage, 29 ... second U-turn passage, 30 ... straight valve member, 31 ... outer cylinder member, 32 ... first member, 33 ... second member, 34 ... O-ring, 35 ... spring member, 50 ... piston section, 51 ... first piston, 52 ... second piston, 53 ... bracket, 54 ... bracket body, 54a ... U-turn-valve-member holding hole, 54b ... straight-valve-member holding hole, 54c ... refrigerant passage hole, 55, 56 ... piston mounting piece, 57 ... first working chamber, 58 ... second working chamber, 59 ... valve chamber, 60 ... pilot section, 71, 72, 72, 74 ... thin pipe, pA, pB, pC, pD, pE, pF ... port, A, B, C, D, E, F ... conduit, L ... axis, Sa ... projected area of inner shape of sealing member, Sb ... opening area of second valve component, Sc ... opening area of first valve component, PH ... pressure of high-pressure refrigerant, PM ... pressure of medium-pressure refrigerant, PL ... pressure of low-pressure refrigerant

**Claims**

1.  A flow passage switching valve (1) comprising:

    a valve housing (10) in a cylindrical shape including a valve chamber (59);
    a first valve seat (13) disposed in the valve chamber (59);
    a second valve seat (15) disposed in the valve chamber (59) and facing the first valve seat (13); and
    a U-turn valve member (20) disposed between the first valve seat (13) and the second valve seat (15) and slidable in an axis direction,
    wherein the U-turn valve member (20) includes a first valve component (21) disposed near the first valve seat (13) and a second valve component (22) in a cylindrical shape disposed near the second valve seat (15),
    wherein the first valve component (21) includes a first U-turn passage (28) which has an opening on an end surface (21a) facing the first valve seat (13) and through which two ports of a plurality of ports (pB, pA, pF) provided in the first valve seat (13) are connected, and an annular wall portion (21c) which is a portion near the second valve seat (15) and in which an end portion (22c) of the second valve component (22) is fitted, the end portion (22c) being near the first valve seat (13),
    wherein a second U-turn passage (29) through which two ports of a plurality of ports (pC, pD, pE) provided in the second valve seat (15) are connected is formed by an end surface (21b) of the first valve component (21) and an inner circumferential surface (22e) of the second valve component (22), the end surface (21b) facing the second valve seat (15),
    wherein a sealing member (23) in an annular shape is disposed between an inner circumferential surface (21d) of the annular wall portion (21c) and an outer circumferential surface (22d) of the end portion (22c) of the second valve component (22), the end portion (22c) being near the first valve seat (13), and
    **characterized in that** an expression (1) below holds, where Sa denotes a projected area defined by an inner shape of the sealing member (23) projected in a direction in which the first valve seat (13) and the second valve seat (15) face each other, and Sb denotes an area of an opening of the second valve component (22), the opening facing the second valve seat (15).

$$(1)\ Sb > Sa$$

2.  A flow passage switching valve (1) comprising:

    a valve housing (10) in a cylindrical shape including a valve chamber (59);
    a first valve seat (13) disposed in the valve chamber (59);
    a second valve seat (15) disposed in the valve chamber (59) and facing the first valve seat (13); and
    a U-turn valve member (20A) disposed between the first valve seat (13) and the second valve seat (15) and slidable in an axis direction,
    wherein the U-turn valve member (20A) includes a first valve component (21A) disposed near the first valve seat (13) and a second valve component (22A) in a cylindrical shape disposed near the second valve seat (15),
    wherein the first valve component (21A) includes a first U-turn passage (28) which has an opening on an end surface (21a) facing the first valve seat (13) and through which two ports of a plurality of ports (pB, pA, pF) provided in the first valve seat (13) are connected,
    wherein an end portion (21e) of the first valve component (21A) is fitted in the second valve component (22A), the end portion (21e) being near the second valve seat (15),
    wherein a second U-turn passage (29) through which two ports of a plurality of ports (pC, pD, pE) provided in the second valve seat (15) are connected is formed by an end surface (21b) of the first valve component (21) and an inner circumferential surface (22e) of the second valve component (22), the end surface (21b) facing the second valve seat (15),
    wherein a sealing member (23) in an annular shape is disposed between an outer circumferential surface (21f) of the end portion (21e) of the first valve component (21A) and the inner circumferential surface (22e) of the second valve component (22A), the end portion (21e) being near the second valve seat (15), and

**characterized in that** an expression (1) below holds, where Sa denotes a projected area defined by an inner shape of the seal member projected in a direction in which the first valve seat (13) and the second valve seat (15) face each other, and Sb denotes an area of an opening of the second valve component (22), the opening facing the second valve seat (15).

$$(1)\ Sb > Sa$$

3. The flow passage switching valve (1) according to Claim 1 or 2, wherein expressions (2), (3) below hold, Sc denotes an area of the opening of the first valve component (21), the opening facing the first valve seat (13), PH denotes a pressure of a fluid in the valve chamber, PM denotes a pressure of a fluid in the first U-turn passage, and PL denotes a pressure of a fluid in the second U-turn passage.

$$(2)\ PH > PM \geq PL$$

$$(3)\ (PH - PM) \times (Sc - Sa) - (PM - PL) \times Sa > 0$$

4. The flow passage switching valve (1) according to any one of Claims 1 to 3, further comprising:

   a straight valve member (30) disposed between the first valve seat (13) and the second valve seat (15) and slidable in the axis direction,
   wherein the straight valve member (30) is disposed slidably together with the U-turn valve member (20, 20A) and includes a straight passage (36) through which a port (pB) of the plurality of ports provided in the first valve seat (13) and a port (pC) of the plurality of ports provided in the second valve seat (15) are connected.

5. The flow passage switching valve (1) according to any one of Claims 1 to 4, wherein a compressed coil spring is disposed between the first valve component (21) and the second valve component (22).

**Patentansprüche**

1. Strömungsdurchgangsumschaltventil (1), umfassend:

   ein Ventilgehäuse (10) in einer zylindrischen Form, das eine Ventilkammer (59) enthält;
   einen ersten Ventilsitz (13), der in der Ventilkammer (59) angeordnet ist;
   einen zweiten Ventilsitz (15), der in der Ventilkammer (59) angeordnet ist und dem ersten Ventilsitz (13) zugewandt ist; und
   ein Kehrtwende-Ventilelement (20), das zwischen dem ersten Ventilsitz (13) und dem zweiten Ventilsitz (15) angeordnet ist und in einer Achsenrichtung verschiebbar ist,
   wobei das Kehrtwende-Ventilelement (20) eine erste Ventilkomponente (21), die in der Nähe des ersten Ventilsitzes (13) angeordnet ist, und eine zweite Ventilkomponente (22) in einer zylindrischen Form, die in der Nähe des zweiten Ventilsitzes (15) angeordnet ist, enthält,
   wobei die erste Ventilkomponente (21) einen ersten Kehrtwendedurchgang (28), der eine Öffnung an einer Endfläche (21a) aufweist, die dem ersten Ventilsitz (13) zugewandt ist, und durch den zwei Anschlüsse einer Vielzahl von Anschlüssen (pB, pA, pF), die in dem ersten Ventilsitz (13) vorgesehen sind, verbunden sind, und einen ringförmigen Wandabschnitt (21c), der ein Abschnitt in der Nähe des zweiten Ventilsitzes (15) ist und in den ein Endabschnitt (22c) der zweiten Ventilkomponente (22) eingepasst ist, enthält, wobei der Endabschnitt (22c) in der Nähe des ersten Ventilsitzes (13) ist,
   wobei ein zweiter Kehrtwendedurchgang (29), durch den zwei Anschlüsse einer Vielzahl von Anschlüssen (pC, pD, pE), die in dem zweiten Ventilsitz (15) vorgesehen sind, verbunden sind, durch eine Endfläche (21b) der ersten Ventilkomponente (21) und eine Innenumfangsfläche (22e) der zweiten Ventilkomponente (22) gebildet ist, wobei die Endfläche (21b) dem zweiten Ventilsitz (15) zugewandt ist,
   wobei ein Dichtungselement (23) in einer ringförmigen Form zwischen einer Innenumfangsfläche (2ld) des ringförmigen Wandabschnitts (21c) und einer Außenumfangsfläche (22d) des Endabschnitts (22c) der zweiten Ventilkomponente (22) angeordnet ist, wobei der Endabschnitt (22c) in der Nähe des ersten Ventilsitzes (13) ist,

**dadurch gekennzeichnet, dass** ein nachfolgend genannter Ausdruck (1) gilt, in welchem Sa eine projizierte Fläche bezeichnet, die durch eine Innenform des Dichtungselements (23) definiert ist, die in einer Richtung projiziert ist, in der der erste Ventilsitz (13) und der zweite Ventilsitz (15) einander zugewandt sind, und Sb eine Fläche einer Öffnung der zweiten Ventilkomponente (22) bezeichnet, wobei die Öffnung dem zweiten Ventilsitz (15) zugewandt ist.

$$(1)\ Sb > Sa$$

2. Strömungsdurchgangsumschaltventil (1), umfassend:

ein Ventilgehäuse (10) in einer zylindrischen Form, das eine Ventilkammer (59) enthält;
einen ersten Ventilsitz (13), der in der Ventilkammer (59) angeordnet ist;
einen zweiten Ventilsitz (15), der in der Ventilkammer (59) angeordnet ist und dem ersten Ventilsitz (13) zugewandt ist; und
ein Kehrtwende-Ventilelement (20A), das zwischen dem ersten Ventilsitz (13) und dem zweiten Ventilsitz (15) angeordnet ist und in einer Achsenrichtung verschiebbar ist,
wobei das Kehrtwende-Ventilelement (20A) eine erste Ventilkomponente (21A), die in der Nähe des ersten Ventilsitzes (13) angeordnet ist, und eine zweite Ventilkomponente (22A) in einer zylindrischen Form, die in der Nähe des zweiten Ventilsitzes (15) angeordnet ist, enthält,
wobei die erste Ventilkomponente (21A) einen ersten Kehrtwendedurchgang (28), der eine Öffnung an einer Endfläche (21a) aufweist, die dem ersten Ventilsitz (13) zugewandt ist, und durch den zwei Anschlüsse einer Vielzahl von Anschlüssen (pB, pA, pF), die in dem ersten Ventilsitz (13) vorgesehen sind, verbunden sind, enthält,
wobei ein Endabschnitt (21e) der ersten Ventilkomponente (21A) in die zweite Ventilkomponente (22A) eingepasst ist, wobei der Endabschnitt (21e) in der Nähe des zweiten Ventilsitzes (15) ist,
wobei ein zweiter Kehrtwendedurchgang (29), durch den zwei Anschlüsse einer Vielzahl von Anschlüssen (pC, pD, pE), die in dem zweiten Ventilsitz (15) vorgesehen sind, verbunden sind, durch eine Endfläche (21b) der ersten Ventilkomponente (21) und eine Innenumfangsfläche (22e) der zweiten Ventilkomponente (22) gebildet ist, wobei die Endfläche (21b) dem zweiten Ventilsitz (15) zugewandt ist,
wobei ein Dichtungselement (23) in einer ringförmigen Form zwischen einer Außenumfangsfläche (21f) des Endabschnitts (21e) der ersten Ventilkomponente (21A) und der Innenumfangsfläche (22e) der zweiten Ventilkomponente (22A) angeordnet ist, wobei der Endabschnitt (21e) in der Nähe des zweiten Ventilsitzes (15) ist,
**dadurch gekennzeichnet, dass** ein nachfolgend genannter Ausdruck (1) gilt, in welchem Sa eine projizierte Fläche bezeichnet, die durch eine Innenform des Dichtungselements definiert ist, die in einer Richtung projiziert ist, in der der erste Ventilsitz (13) und der zweite Ventilsitz (15) einander zugewandt sind, und Sb eine Fläche einer Öffnung der zweiten Ventilkomponente (22) bezeichnet, wobei die Öffnung dem zweiten Ventilsitz (15) zuge-wandt ist.

$$(1)\ Sb > Sa$$

3. Strömungsdurchgangsumschaltventil (1) nach Anspruch 1 oder 2, wobei die nachfolgend genannten Ausdrücke (2), (3) gelten, in denen Sc eine Fläche der Öffnung der ersten Ventilkomponente (21) bezeichnet, wobei die Öffnung dem ersten Ventilsitz (13) zugewandt ist, PH einen Druck eines Fluids in der Ventilkammer bezeichnet, PM einen Druck eines Fluids in dem ersten Kehrtwendedurchgang bezeichnet und PL einen Druck eines Fluids in dem zweiten Kehrtwendedurchgang bezeichnet.

$$(2)\ PH > PM \geq PL$$

$$(3)\ (PH - PM) \times (Sc - Sa) - (PM - PL) \times Sa > 0$$

4. Strömungsdurchgangsumschaltventil (1) nach einem der Ansprüche 1 bis 3, ferner umfassend:

ein gerades Ventilelement (30), das zwischen dem ersten Ventilsitz (13) und dem zweiten Ventilsitz (15) angeordnet ist und in der Achsenrichtung verschiebbar ist,
wobei das gerade Ventilelement (30) zusammen mit dem Kehrtwende-Ventilelement (20, 20A) verschiebbar angeordnet ist und einen geraden Durchgang (36) enthält, durch den ein Anschluss (pB) der Vielzahl von Anschlüssen, die in dem ersten Ventilsitz (13) vorgesehen sind, und ein Anschluss (pC) der Vielzahl von Anschlüssen, die in dem zweiten Ventilsitz (15) vorgesehen sind, verbunden sind.

**5.** Strömungsdurchgangsumschaltventil (1) nach einem der Ansprüche 1 bis 4, wobei eine komprimierte Schraubenfeder zwischen der ersten Ventilkomponente (21) und der zweiten Ventilkomponente (22) angeordnet ist.

## Revendications

**1.** Soupape de commutation de passage d'écoulement (1) comportant :

un boîtier de soupape (10) de forme cylindrique incluant une chambre de soupape (59) ;
un premier siège de soupape (13) disposé dans la chambre de soupape (59) ;
un second siège de soupape (15) disposé dans la chambre de soupape (59) et dirigé vers le premier siège de soupape (13) ; et
un élément de soupape en demi-tour (20) disposé entre le premier siège de soupape (13) et le second siège de soupape (15) et pouvant coulisser dans une direction axiale,
dans laquelle l'élément de soupape en demi-tour (20) inclut un premier composant de soupape (21) disposé près du premier siège de soupape (13) et un second composant de soupape (22) de forme cylindrique disposé près du second siège de soupape (15),
dans laquelle le premier composant de soupape (21) inclut un premier passage en demi-tour (28) qui a une ouverture sur une surface d'extrémité (21a) dirigée vers le premier siège de soupape (13) et par laquelle deux orifices d'une pluralité d'orifices (pB, pA, pF) ménagés dans le premier siège de soupape (13) sont reliés, et une partie de paroi annulaire (21c) qui est une partie située près du second siège de soupape (15) et dans laquelle une partie d'extrémité (22c) du second composant de soupape (22) est montée, la partie d'extrémité (22c) étant située près du premier siège de soupape (13),
dans laquelle un second passage en demi-tour (29), par lequel deux orifices d'une pluralité d'orifices (pC, pD, pE) ménagés dans le second siège de soupape (15) sont reliés, est formé par une surface d'extrémité (21b) du premier composant de soupape (21) et une surface circonférentielle intérieure (22e) du second composant de soupape (22), la surface d'extrémité (21b) étant dirigée vers le second siège de soupape (15),
dans laquelle un élément d'étanchéité (23) de forme annulaire est disposé entre une surface circonférentielle intérieure (21d) de la partie de paroi annulaire (21c) et une surface circonférentielle extérieure (22d) de la partie d'extrémité (22c) du second composant de soupape (22), la partie d'extrémité (22c) étant située près du premier siège de soupape (13), et
**caractérisée en ce qu'**une expression (1) ci-dessous s'applique, dans laquelle Sa représente une aire projetée définie par une forme intérieure de l'élément d'étanchéité (23) projetée dans une direction dans laquelle le premier siège de soupape (13) et le second siège de soupape (15) sont dirigés l'un vers l'autre, et Sb représente une aire d'une ouverture du second composant de soupape (22), l'ouverture étant dirigée vers le second siège de soupape (15),

$$(1) \quad Sb > Sa.$$

**2.** Soupape de commutation de passage d'écoulement (1) comportant :

un boîtier de soupape (10) de forme cylindrique incluant une chambre de soupape (59) ;
un premier siège de soupape (13) disposé dans la chambre de soupape (59) ;
un second siège de soupape (15) disposé dans la chambre de soupape (59) et dirigé vers le premier siège de soupape (13) ; et
un élément de soupape en demi-tour (20A) disposé entre le premier siège de soupape (13) et le second siège de soupape (15) et pouvant coulisser dans une direction axiale,
dans laquelle l'élément de soupape en demi-tour (20A) inclut un premier composant de soupape (21A) disposé près du premier siège de soupape (13) et un second composant de soupape (22A) de forme cylindrique disposé près du second siège de soupape (15),

dans laquelle le premier composant de soupape (21A) inclut un premier passage en demi-tour (28) qui a une ouverture sur une surface d'extrémité (21a) dirigée vers le premier siège de soupape (13) et par laquelle deux orifices d'une pluralité d'orifices (pB, pA, pF) ménagés dans le premier siège de soupape (13) sont reliés,

dans laquelle une partie d'extrémité (21e) du premier composant de soupape (21A) est montée dans le second composant de soupape (22A), la partie d'extrémité (21e) étant située près du second siège de soupape (15), dans laquelle un second passage en demi-tour (29), par lequel deux orifices d'une pluralité d'orifices (pC, pD, pE) ménagés dans le second siège de soupape (15) sont reliés, est formé par une surface d'extrémité (21b) du premier composant de soupape (21) et une surface circonférentielle intérieure (22e) du second composant de soupape (22), la surface d'extrémité (21b) étant dirigée vers le second siège de soupape (15),

dans laquelle un élément d'étanchéité (23) de forme annulaire est disposé entre une surface circonférentielle extérieure (21f) de la partie d'extrémité (21e) du premier composant de soupape (21A) et la surface circonférentielle intérieure (22e) du second composant de soupape (22A), la partie d'extrémité (21e) étant située près du second siège de soupape (15), et

**caractérisée en ce qu'**une expression (1) ci-dessous s'applique, dans laquelle Sa représente une aire projetée définie par une forme intérieure de l'élément d'étanchéité (23) projetée dans une direction dans laquelle le premier siège de soupape (13) et le second siège de soupape (15) sont dirigés l'un vers l'autre, et Sb représente une aire d'une ouverture du second composant de soupape (22), l'ouverture étant dirigée vers le second siège de soupape (15),

$$(1) \; Sb > Sa.$$

3. Soupape de commutation de passage d'écoulement (1) selon la revendication 1 ou 2, dans laquelle des expressions (2), (3) ci-dessous s'appliquent, Sc représente une aire de l'ouverture du premier composant de soupape (21), l'ouverture étant dirigée vers le premier siège de soupape (13), PH représente une pression d'un fluide dans la chambre de soupape, PM représente une pression d'un fluide dans le premier passage en demi-tour, et PL représente une pression d'un fluide dans le second passage en demi-tour.

$$(2) \; PH > PM \geq PL$$

$$(3) \; (PH - PM) \times (Sc - Sa) - (PM - PL) \times Sa > 0.$$

4. Soupape de commutation de passage d'écoulement (1) selon l'une quelconque des revendications 1 à 3, comportant en outre :

un élément de soupape droit (30) disposé entre le premier siège de soupape (13) et le second siège de soupape (15) et pouvant coulisser dans la direction axiale,
dans laquelle l'élément de soupape droit (30) est disposé de manière à pouvoir coulisser conjointement avec l'élément de soupape en demi-tour (20, 20A) et inclut un passage droit (36) par lequel un orifice (pB) de la pluralité d'orifices ménagés dans le premier siège de soupape (13) et un orifice (pC) de la pluralité d'orifices ménagés dans le second siège de soupape (15) sont reliés.

5. Soupape de commutation de passage d'écoulement (1) selon l'une quelconque des revendications 1 à 4, dans laquelle un ressort hélicoïdal comprimé est disposé entre le premier composant de soupape (21) et le second composant de soupape (22).

Fig.1

# Fig.2

# Fig.3

Fig.4

Fig.5

# Fig.6A

# Fig.6B

# Fig.6C

# Fig.7A

# Fig.7B

# Fig.7C

( c )

# Fig.8

**REFERENCES CITED IN THE DESCRIPTION**

**Patent documents cited in the description**

- CN 109578616 A
- JP 2018044666 A